**Europäisches Patentamt**

(19) **European Patent Office**

**Office européen des brevets**

(11) Numéro de publication: **0 035 485**
**B1**

(12) FASCICULE DE BREVET EUROPEEN

(45) Date de publication du fascicule du brevet:
30.05.84

(21) Numéro de dépôt: 81870010.6

(22) Date de dépôt: 06.02.81

(51) Int. Cl.³: **H 04 B 9/00, H 04 B 1/74**

(54) Emetteur à laser à semi-conducteur commandé par amplificateur.

(30) Priorité: 07.02.80 EP 80870008

(43) Date de publication de la demande:
09.09.81 Bulletin 81/36

(45) Mention de la délivrance du brevet:
30.05.84 Bulletin 84/22

(84) Etats contractants désignés:
AT BE CH DE FR GB IT LI LU NL SE

(56) Documents cités:
PATENTS ABSTRACTS OF JAPAN, vol. 2, no. 109, 9
septembre 1978, page 5946 E 78
ELECTRONICS LETTERS, vol. 14, no. 24, 23 novembre
1978, pages 775-776 LONDRE (GB) D.W. SMITH: "Laser
level-control circuit for high-bit-rate systems using a
slope detector"
XEROX DISCLOSURE JOURNAL, vol. 5, no. 4,
juillet/août 1980, NEW YORK (US) W. STREIFER:
"Redundancy in Diode Laser Applications", pages 399
and 400
PATENTS ABSTRACTS OF JAPAN, vol. 2, no. 124, 18
octobre 1978, page 7348 E 78

(73) Titulaire: **ATELIERS DE CONSTRUCTIONS
ELECTRIQUES DE CHARLEROI (ACEC) Société
Anonyme, Avenue Lloyd George 7, B-1050 Bruxelles (BE)**

(72) Inventeur: **Franckart, Jean-Pierre, Rue de Berzée, 13,
B-6420 Thy-Le-Chateau (BE)**

(74) Mandataire: **Bossard, Franz et al, ACEC - Service des
Brevets Boîte Postale 4, B-6000 Charleroi (BE)**

ACTORUM AG

## Description

La présente invention a pour objet un émetteur à laser à semi-conducteur commandé par amplificateur, émettant un signal de sortie dans une fibre optique. L'émetteur suivant l'invention est destiné à la transmission optique de signaux numériques à cadence de transmission très élevées, au dessus de 100 M bits/seconde, par exemple, des signaux de télévision encodés sous forme numérique.

L'invention a pour but de compenser certaines faiblesses des lasers à semi-conducteur qui les rendent peu aptes à un service fiable tel qu'il est nécessaire par exemple pour la transmission de signaux de télévision. Ces lasers ont notamment des caractéristiques dépendant très fortement de la température, une durée de vie réduite lorsqu'ils fonctionnent à température élevée et l'évolution de leurs propriétés au cours du temps est peu prévisible. Un autre but est de solliciter moins les lasers afin d'augmenter leur durée de vie.

Il existe déjà des émetteurs à laser à semi-conducteur, décrits par exemple dans Electronics letter 23 nov. 1978 Vol. 14 No. 24 comprenant un circuit d'entrée en amont du laser une fibre optique véhiculant la lumière émise par le laser, un coupleur reliant la dite fibre optique à une fibre de transmission et à une fibre de mesure, un ensemble photodiode-amplificateur relié à la fibre de mesure, un détecteur du niveau logique 1 relié à l'ensemble photodiode-amplificateur, un détecteur du niveau logique 0 relié à l'ensemble photodiode-amplificateur et un circuit de commande automatique de la puissance lumineuse émise par le laser comprenant deux comparateurs dont les entrées sont reliées aux dits détecteurs de niveaux logiques et dont les sorties sont reliées au circuit d'entrée.

L'émetteur à laser suivant l'invention est caractérisé en ce que les circuits d'entrée d'au moins deux lasers connectés à un même coupleur, dont un seul est en service à un moment donné, sont reliés au même circuit de commande automatique et en ce que le circuit de commande automatique comprend un dispositif d'asservissement dont les entrées sont reliées aux sorties des comparateurs et dont les sorties, reliées aux circuits d'entrée, produisent des signaux de commande de gain et de point de repos, chaque comparateur comportant deux entrées reliées aux sorties des détecteurs logiques et une entrée reliée à la sortie d'un générateur de consignes dont les entrées sont reliées aux sorties du dispositif d'asservissement de manière à ce que les signaux de consigne soient respectivement fonction des signaux de commande de gain et de point de repos.

L'invention est expliquée ci-dessous à l'aide d'un exemple d'une forme d'exécution en se référant au dessin annexé.

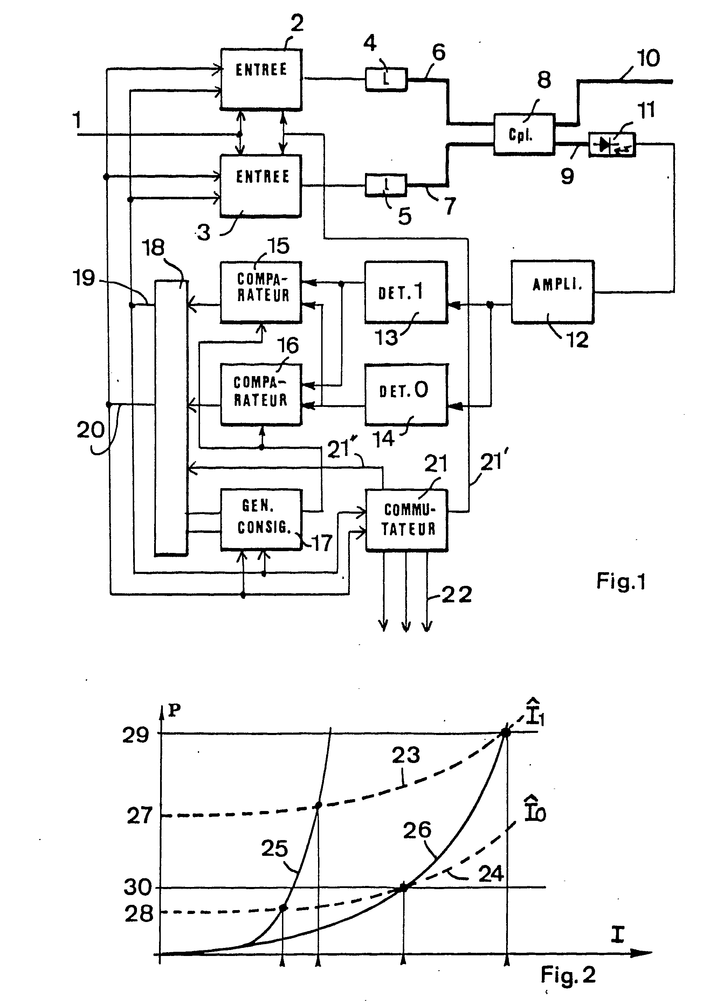

La figure 1 du dessin représente le schéma bloc d'un émetteur à laser à semi-conducteur. La figure 2 représente des diagrammes de la puissance lumineuse émise par les lasers en fonction du courant électrique en début et à la fin de la durée de vie.

Un signal représentant de l'information sous forme numérique à transmettre est appliqué au moyen d'un conducteur 1 à l'entrée de plusieurs, en l'occurrence deux circuits d'entrée 2 et 3 dont les sorties commandent respectivement deux lasers 4 et 5 à semi-conducteur, chacun relié à une fibre optique 6 et 7. Quand un des circuits d'entrée 2 et 3 et par conséquent un des lasers 4 et 5 est en service, l'autre est de garde. Les fibres optiques 6 et 7 sont reliées à un coupleur optique 8 dont les fibres de sortie 9 et 10 véhiculent chacune une fraction du signal reçu, soit via la fibre 6, soit via la fibre 7. La fraction du signal quittant le coupleur 8 par la fibre 10 est le signal utile. La fraction du signal quittant le coupleur 8 par la fibre 9 est mesurée par une diode photosensible 11 par exemple du type PIN. Le courant de sortie de la diode 11 est en principe un signal rectangulaire oscillant entre deux niveaux correspondant aux valeurs logiques 1 et 0. Il parcourt un préamplificateur 12 dont le signal de sortie est appliqué à l'entrée d'un détecteur 13 de la valeur logique 1 et d'un détecteur 14 de la valeur logique complémentaire 0. Les détecteurs 13 et 14 mesurent l'intensité du courant correspondant aux valeurs logiques, laquelle est proportionnelle à l'intensité lumineuse émise par le laser en service. Les valeurs mesurées par les détecteurs 13 et 14, sont comparées à des consignes dans des comparateurs 15 et 16. Les consignes sont élaborées dans un générateur de consignes 17. Le générateur de consignes 17 peut tenir compte des effets de vieillissement et des variations des courbes de la caractéristiques puissance lumineuse P-courant d'excitation I du laser (figure 2). Un écart par rapport aux consignes est corrigé à l'aide de signaux de commande de gain et de point de repos émis par un dispositif de commande d'asservissement 18 sur des conducteurs 19 et 20 appliqués aux circuits d'entrée 2, 3 des différents lasers. Comme un seul des lasers est en service, tandis que les autres sont de garde, un seul dispositif d'asservissement suffit pour tous les circuits d'entrée 2 et 3, même si chacun des circuits d'entrée et des lasers possède des caractéristiques différentes des autres.

Un dispositif de commande 21, recevant également les signaux de commande et de point de repos adressés aux circuits d'entrée 2 et 3 est agencé pour détecter la fin de vie du laser en service, pour émettre sur un conducteur 21', un signal de commutation qui met en service le circuit d'entrée et le laser qui sont de garde et pour émettre un signal d'alerte sur un des conducteurs 22. Le dispositif de commande 21 peut émettre, en outre, sur les conducteurs 22, des signaux d'affichage signalant l'état de vieillissement du laser en service, l'identification du laser en service etc. Il est possible de prévoir plusieurs lasers de garde et d'utiliser un coupleur de fibres optiques permettant de transmettre dans une fibre de sortie unique la lumière émise par n'importe lequel des lasers de l'émetteur. Dans ce cas on peut prévoir un coupleur dans lequel on prélève à une des sorties une faible fraction de la puissance lumineuse véhiculant le signal utile dans la fibre optique. Un tel coupleur est obtenu par exemple, en détériorant légèrement la surface de la fibre optique et en l'immergeant dans un liquide transparent en contact avec la face réceptrice d'une diode photosensible.

Le diagramme de la figure 2 représente en pointillé les consignes des niveaux de puissance lumineuse 23 et 24 pour le niveau logique 1 et le niveau logique 0 ainsi qu'une caractéristique 25 du laser en début et une caractéristique 26 du laser à la fin de sa durée de vie. A chaque commutation du dispositif 21, le dispositif d'asservissement est remis à zéro via un conducteur 21'', et le générateur de consigne 17 donne comme premières consignes les niveaux 27 et 28 d'un laser neuf. Au cours du vieillissement d'un laser la caractéristique 25 se déforme de plus en plus et atteint, à un certain moment, une forme telle que 26. Pour maintenir un écart de courant d'excitation du laser pour les deux niveaux logiques 1 et 0 qui ne soit pas trop important, il est nécessaire d'augmenter les puissances lumineuses émises, ce qui est représenté par les courbes en pointillé. Si on désigne par 29 et 30 les niveaux atteints à la fin de la vie d'un laser, on constate que l'agencement du générateur de consignes suivant l'invention permet de faire fonctionner le laser à des niveaux aussi bas que 27 et 28 pendant la plus grande partie de leur durée de vie, ce qui a pour effet de prolonger cette durée de vie.

## Revendications

1. Emetteur à laser comprenant un laser à semiconducteur (4, 5), un circuit d'entrée (2, 3) en amont du laser, une fibre optique (6, 7) véhiculant la lumière émise par le laser (4, 5), un coupleur (8) reliant la fibre véhiculant la lumière émise par le laser (4, 5) vers une fibre de transmission (10) et vers une fibre de mesure (9) un ensemble photodiode-amplificateur (11, 12) relié à la fibre de mesure (9), un détecteur de niveau logique 1 (13) relié à l'ensemble photodiode-amplificateur (11, 12), un détecteur de niveau logique 0 (14), relié à l'ensemble photodiode-amplificateur (11, 12) et un circuit de commande automatique de la puissance lumineuse émise par le laser comprenant deux comparateurs (15, 16) dont les entrées sont reliées aux dits détecteurs de niveaux logiques (13, 14) et dont les sorties sont reliées au circuit d'entrée (2, 3), caractérisé en ce que les circuits d'entrée (2, 3) d'au moins deux lasers (4, 5) connectés à une même coupleur (8), dont un seul est en service à un moment donné, sont reliés au même circuit de commande automatique et en ce que le circuit de commande automatique comprend un dispositif d'asservissement (18) dont les entrées sont reliées aux sorties des comparateurs (15, 16) et dont les sorties, reliées aux circuits d'entrée (2, 3), produisent des signaux de commande de gain et de point de repos, chaque comparateur (15, 16) comportant deux entrées reliées aux sorties des détecteurs logiques (13, 14) et une entrée reliée à la sortie d'un générateur de consignes (17) dont les entrées sont reliées aux sorties du dispositif d'asservissement (18) de manière à ce que les signaux de consigne soient respectivement fonction des signaux de commande de gain et de point de repos.

2. Emetteur à laser, selon la revendication 1, caractérisé en ce qu'un dispositif de commande (21) sensible aux signaux de commande de gain et de point de repos variant en fonction du vieillissement du laser appliqués aux circuits d'entrée (2, 3) est agencé pour détecter une configuration représentative de la fin de vie d'un laser et pour actionner un signal de commutation appliqué aux circuits d'entrée pour mettre hors circuit le laser (4, 5) vieilli et mettre en circuit un des lasers (4, 5) de garde en donnant comme premières consignes au générateur de consignes (17) les niveaux (27, 28) d'un laser neuf.

## Patentansprüche

1. Lasersender, bestehend aus einem Halbleiterlaser (4, 5), einem zum Laser führenden Eingangskreis (2, 3), einer optischen Faser (6, 7), die das vom Laser (4, 5) ausgesendete Licht transportiert, einer Kupplung (8), die das vom Laser (4, 5) ausgesendete Licht zu einer Übertragungsfaser (10) und über eine Messfaser (9) zu einer Photodioden-Verstärkeranordnung (11, 12) führt, die mit der Messfaser verbunden ist, einem Detektor (13) für das logische Niveau 1, der mit der Photodioden-Verstärkeranordnung (11, 12) verbunden ist, einem Detektor (14) für das logische Niveau $\overline{0}$, der mit der Photodioden-Verstärkeranordnung (11, 12) verbunden ist, und aus einem automatischen Steuerkreis für die Lichtleistung, die vom Laser ausgesendet wird und zwei Vergleicher (15, 16) aufweist, deren Eingänge mit den vorgenannten Detektoren (13, 14) der logischen Niveaus verbunden sind und deren Ausgänge mit dem Eingangskreis (2, 3) verbunden sind, dadurch gekennzeichnet, dass die Eingangskreise (2, 3) wenigstens zwei Laser (4, 5), von denen in einem gegebenen Augenblick nur einer in Betrieb ist, an einen einzigen Koppler (8) angeschlossen sind, und dass der automatische Steuerkreis eine Regelvorrichtung (18) umfasst, deren Eingänge mit den Ausgängen der Vergleicher (15, 16) verbunden sind und deren mit den Eingangskreisen (2, 3) verbundenen Ausgänge Steuersignale für Verstärkung und Ruhepunkt erzeugen, jeder Vergleicher (15, 16) zwei mit den Ausgängen der logischen Detektoren (13, 14) verbundene Eingänge und einen Eingang, der mit dem Ausgang eines Befehlsgenerators (17) verbunden ist, aufweist, dessen Eingänge mit den Ausgängen der Regelvorrichtung (18) derart verbunden sind, dass die Befehlssignale jeweils Funktion der Steuersignale für Verstärkung und Ruhepunkt sind.

2. Lasersender nach Anspruch 1, gekennzeichnet durch eine auf die sich in Abhängigkeit von der Alterung der in den Eingangskreisen (2, 3) verwendeten Laser verändernden Steuersignale für Verstärkung und Ruhepunkt ansprechende Steuereinrichtung (21), um eine repräsentative Darstellung vom Lebensende eines Laser festzustellen und um ein Umschaltesignal herbeizuführen, das den Eingangskreisen aufgedrückt wird, um den gealterten Laser (4, 5) ausser Betrieb zu setzen und einen Laser (4, 5) der Bereitschaft einzuschalten, indem sie als erste Informationen dem Befehlsgenerator (17) die Niveaus (27, 28) eines neuen Laser eingibt.

## Claims

1. Laser emitter comprising a semiconductor laser (4, 5), an input circuit (2, 3) before the laser, an optical fibre (6, 7) carrying the light emitted by the laser (4, 5), a coupler (8) connecting the fibre carrying the light emitted by the laser (4, 5) towards a transmission fibre (10) and towards a measuring fibre (9), a photodiode-amplifier assembly (11, 12) connected to the measuring fibre (9), an element for detecting the logic level 1 (13) connected to the photodiode-amplifier assembly (11, 12), an element detecting the logic level 0 (14), connected to the photodiode-amplifier assembly (11, 12), and an automatic control circuit for the light intensity emitted by the laser comprising two comparators (15, 16) whose inputs are connected to the said logic level detecting elements (13, 14) and whose outputs are connected to the input circuit (2, 3), characterised in that the input circuits (2, 3) of at least two lasers (4, 5) connected to one and the same coupler (8), only one of which is in operation at any one time, are connected to the same automatic control circuit and in that the automatic control circuit comprises a control unit (18) whose inputs are connected to the outputs of the comparators (15, 16) and whose outputs, connected to the input circuits (2, 3), produce neutral point and gain control signals, each comparator (15, 16) comprising two inputs connected to the outputs of the logic detecting elements (13, 14) and an input connected to the output of a reference signal generator (17) whose inputs are connected to the outputs of the control unit (18) in such a manner that the reference signals are respectively dependent on the neutral point and gain control signals.

2. Laser emitter according to claim 1, characterised in that a control element (21) responsive to the neutral point and gain control signals varying in accordance with the ageing of the laser which are applied to the input circuits (2, 3) is adapted to detect a configuration representative of the end of the life of a laser and to actuate a switching signal applied to the input circuits to put out of circuit the aged laser (4, 5) and to bring one of the standby lasers (4, 5) into circuit, giving as first orders to the reference signal generator (17) the levels (27, 28) of a new laser.

Fig.1

Fig. 2